(19) Europäisches Patentamt
European Patent Office
Office européen des brevets

(11) **EP 3 929 414 B1**

(12) **EUROPÄISCHE PATENTSCHRIFT**

(45) Veröffentlichungstag und Bekanntmachung des Hinweises auf die Patenterteilung:
**22.04.2026 Patentblatt 2026/17**

(21) Anmeldenummer: **21192498.0**

(22) Anmeldetag: **27.09.2012**

(51) Internationale Patentklassifikation (IPC):
**F01N 3/20** *(2006.01)* **F02D 41/02** *(2006.01)*

(52) Gemeinsame Patentklassifikation (CPC):
**F01N 3/208; F02D 41/027;** F01N 3/106;
F01N 2430/06; F01N 2610/02; F01N 2900/1402;
F02D 41/0055; F02D 41/025; F02D 41/1475;
F02D 41/401; F02D 41/402; Y02C 20/10;
Y02T 10/12

(54) **VERFAHREN ZUR ANWENDUNG IN VERBINDUNG MIT EINER ABGASNACHBEHANDLUNGSANLAGE**

METHOD FOR USE IN CONNECTION WITH AN EXHAUST GAS AFTER-TREATMENT SYSTEM

PROCÉDÉ D'APPLICATION EN LIAISON AVEC UNE INSTALLATION DE TRAITEMENT ULTÉRIEUR DES GAZ D'ÉCHAPPEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2012 DE 102012006449**

(43) Veröffentlichungstag der Anmeldung:
**29.12.2021 Patentblatt 2021/52**

(62) Dokumentnummer(n) der früheren Anmeldung(en) nach Art. 76 EPÜ:
**12006739.2 / 2 644 859**

(73) Patentinhaber: **MAN Truck & Bus SE**
**80995 München (DE)**

(72) Erfinder: **Döring, Andreas**
**82008 Unterhaching (DE)**

(74) Vertreter: **v. Bezold & Partner Patentanwälte - PartG mbB**
**Ridlerstraße 57**
**80339 München (DE)**

(56) Entgegenhaltungen:
**EP-A1- 2 166 203** **EP-A1- 2 439 384**
**WO-A1-2010/140262** **DE-A1- 102006 021 089**
**DE-A1- 102009 038 948** **US-A1- 2011 047 970**
**US-A1- 2012 017 567**

**Beschreibung**

Die Erfindung betrifft eine Vorrichtung zur Nachbehandlung von Abgasen von Brennkraftmaschinen, insbesondere von magerlauffähigen Brennkraftmaschinen von Kraftfahrzeugen, gemäß dem Oberbegriff des Patentanspruches 1.

Der Einsatz von SCR-Katalysatoren zur Reduzierung der Stickoxide in einem Abgasstrom einer Brennkraftmaschine ist allgemein bekannt. Im Rahmen der mit diesen SCR-Katalysatoren durchgeführten selektiven katalytischen Reduktion (SCR) wird dem Abgasstrom eine unmittelbar reduzierend wirkende Substanz, wie beispielsweise Ammoniak oder ein Vorprodukt zugeführt, das erst im Abgas reduzierende Substanzen freisetzt. Als Vorprodukt kann beispielsweise eine wässrige Harnstofflösung verwendet werden.

Bei in Kraftfahrzeugen betriebenen Brennkraftmaschinen gestaltet sich die Stickoxidreduzierung mit Hilfe des SCR-Verfahrens deshalb schwierig, weil zum Einen hier wechselnde Betriebsbedingungen vorherrschen, was die mengenmäßige Zumessung des Reduktionsmittels erschwert, zum anderen kann aus Sicherheitsgründen nicht das äußerst reaktive Reduktionsmittel Ammoniak direkt verwendet werden, sondern dieses muss durch die Zersetzung von Ammoniakvorläufersubstanzen, wie Harnstoff, Guanidiniumformiat, Ammoniumcarbamat o.ä. erzeugt werden.

Zudem ist zu beachten, dass einerseits zwar ein möglichst hoher Umsatz an Stickoxiden erreicht werden soll, andererseits aber unnötige Emissionen von unverbrauchtem Reduktionsmittel, wie beispielsweise Ammoniak, vermieden werden.

Im Zusammenhang mit der Zersetzung von Harnstoff in Ammoniak ist es bekannt, dass dies unter optimalen Bedingungen, d. h. Temperaturen über 350°C, in zwei Stufen geschieht. Nach

$$(NH_2)_2\, CO \rightarrow NH_3 + HNCO \qquad (1)$$

erfolgt zunächst die Thermolyse, d. h. die thermische Zersetzung von Harnstoff. Anschließend erfolgt nach

$$HNCO + H_2O \rightarrow NH_3 + CO_2 \qquad (2)$$

die Hydrolyse, also die katalytische Zersetzung von Isocyansäure (HNCO) in Ammoniak ($NH_3$) und Kohlendioxid ($CO_2$).

Für die Umsetzung von einem Mol Stickstoffmonoxid ist dabei ein Mol Ammoniak notwendig.

$$4NO + 4NH_3 + O_2 \rightarrow 4N_2 + 6H_2O \qquad (3)$$

Das Verhältnis zwischen $NH_3$ und $NO_X$ wird als Feedverhältnis $\alpha$ bezeichnet.

$$\alpha = NH_3 / NO_X \qquad (4)$$

Bei einem idealen Katalysator bedeutet dies, dass bei einem Feedverhältnis von eins alle Stickoxide reduziert werden, also ein 100%-iger $NO_X$-Umsatz erreicht wird, da für den $NO_X$-Umsatz $X_{NOx}$ gilt:

$$X_{NOx} = \frac{c_{NOx,0} - c_{NOx}}{c_{NOx,0}} \qquad (5)$$

mit:

$C_{NOx,0}$ :   $NO_X$-Rohemissionen [ppm]
$c_{NOx}$ :   $NO_X$-Emissionen nach Katalysator [ppm]

Übersteigt die Menge des zugeführten Ammoniaks, die der umgesetzten Stickoxide, kommt es zur Emission von unverbrauchtem Ammoniak. Auf Grund dessen Toxizität ist dies unter allen Umständen zu vermeiden.

Um die Vorgänge am Katalysator besser verstehen zu können, sollen kurz einige reaktionstechnische Grundlagen vermittelt werden.

Betrachtet man sich die Reaktion

$$\left| V_1 \right| \cdot A_1 + \left| V_2 \right| \cdot A_2 \rightarrow \left| V_3 \right| \cdot A_3 + \left| V_4 \right| \cdot A_4 \qquad (6)$$

mit:

A1,A2:     Edukte
A3,A4:     Produkte
$\nu_i$:     stöchiometrische Faktoren
$\nu_i < 0$     für Edukte
$\nu_i > 0$     für Produkte

so läuft diese mit einer bestimmten Geschwindigkeit, der sogenannten Reaktionsgeschwindigkeit "r" ab (7). Diese ist definiert als die zeitliche Änderung der Komponente "i" bezogen auf ihren stöchiometrischen Faktor. Sie bezieht sich somit auf eine Reaktionsgleichung und ist ohne deren Angabe wertlos.

$$r = \frac{1}{\nu_i} \cdot \frac{dn_i}{dt} \tag{7}$$

mit:

$n_i$:    Molanzahl der Komponente i [mol]
t:    Zeit [s]

Für eine volumenbeständige Reaktion kann man die Molzahländerung "$dn_i$" durch die Konzentrationsänderung "$dc_i$" ersetzen:

$$r = \frac{1}{\nu_i} \cdot \frac{dc_i}{dt} \tag{8}$$

mit:

$c_i$:    Konzentration der Komponente i [mol/m3]

Ist nicht die Geschwindigkeit einer bestimmten Reaktion, sondern die Änderung einer Komponente von Bedeutung, so wird von der Stoffmengenänderungsgeschwindigkeit "R" gesprochen.

$$R_i = \frac{dc_i}{dt} \tag{9}$$

Für den Fall von N Reaktionen ergibt sich folglich:

$$R_i = \frac{dc_i}{dt} = \sum_{j=1}^{N} \nu_{ij} \cdot r_j \tag{10}$$

Um Reaktions- und Stoffmengenänderungsgeschwindigkeiten verschiedener Katalysatoren besser untereinander vergleichen zu können, werden sie auf repräsentative Größen, wie z.B. die Katalysatormasse, das Katalysatorvolumen oder die Phasengrenzfläche bezogen.
Um die Zusammenhänge, die die Reaktionsgeschwindigkeit bestimmen, zu beschreiben, gibt es mehrere Ansätze, einer davon ist der sogenannte Potenzansatz, auf den man zurückgreift, wenn der Mechanismus der Reaktion nicht bekannt ist.

$$r = k \cdot c_1^{m_1} \cdot c_2^{m_2} \tag{11}$$

mit

k: Geschwindigkeitskonstante der Reaktion

$m_i$: Teilordnung bezüglich des Reaktanden Ai, $m_i \in R$

m:

$$m = \sum_{i=1}^{N} m_i$$ : Gesamtordnung der Reaktion

Die Teilordnungen "$m_i$" der Reaktanden werden üblicherweise aus Labormessungen bestimmt.

Die Geschwindigkeit einer Reaktion hängt nicht nur von der Konzentration der Edukte und deren Ordnung ab, sondern natürlich auch noch von der Temperatur "T". Diese ist in obigem Ansatz in der Geschwindigkeitskonstante "k" enthalten.

$$k = k_o \cdot e^{\left(-\frac{E_A}{R \cdot T}\right)} \qquad (12)$$

mit

$k_O$: Häufigkeits- oder Stoßfaktor [$mol^{1-m} \cdot s^{-1}$]

$E_A$: Aktivierungsenergie [J/mol]

R: Allgemeine Gaskonstante: 8,31 J/molK

Für die Stoffmengenänderungsgeschwindigkeit für NO an SCR-Katalysatoren kann ein sogenannter formalkinetischer Ansatz (Potenzansatz) der Form

$$R_{NO} = k \cdot c_{NO}^{m} \cdot c_{NH_3}^{n} \qquad (13)$$

verwendet werden, wobei "m" üblicherweise den Werte "Eins" und "n" den Wert "Null" annimmt.

Dies hat praktisch zur Folge, dass sich die Stoffmengenänderungsgeschwindigkeit durch Anheben der NO-Konzentration erhöhen lässt, während eine Erhöhung der $NH_3$-Konzentration keinen Einfluss auf diese hat.

Wird den SCR-Katalysatoren ein platinhaltiger NO-Oxidationskatalysator zur Bildung von $NO_2$ vorgeschaltet

$$2NO + O_2 \leftrightarrow 2NO_2 \qquad (14)$$

So kann die SCR-Reaktion erheblich beschleunigt und die Tieftemperaturaktivität merklich angehoben werden.

$$NO + 2NH_3 + NO_2 \rightarrow 2N_2 + 3H_2O \qquad (15)$$

Da das Reduktionsmittel bei der z. B. Verwendung der als AdBlue® bezeichneten Reduktionsflüssigkeit in einer in Wasser gelösten Form vorliegt, muss dieses Wasser vor und während der eigentlichen Thermolyse und Hydrolyse verdampfen. Liegen die Temperaturen bei den beiden vorstehenden Reaktionen unter 350°C bzw. wird nur langsam erhitzt, bildet sich hauptsächlich feste unschmelzbare Cyanursäure durch Trimerisierung der Isocyansäure, was zu festen Ablagerungen oder gar zur Verstopfung des SCR-Katalysators führt. Abhilfe kann hier, wie in der DE 40 38 054 A1 beschrieben, dadurch geschaffen werden, dass der mit dem Reduktionsmittel beladene Abgasstrom über einen Hydrolysekatalysator geführt wird. Die Abgastemperatur, bei der eine quantitative Hydrolyse möglich wird, lässt sich so auf 160°C absenken, solange die zugegebenen Harnstoffmengen nicht zu groß werden. Ein solcher zusätzlicher Hydrolysekatalysator verteuert jedoch die Anordnung zur Abgasnachbehandlung zusätzlich.

Trotz dieser Maßnahmen gelingt es oft nicht, die Bildung von Cyanursäure, Melamin oder anderen unerwünschten festen Reaktionsprodukten zu vermeiden, insbesondere, wenn die $NH_3$-Vorläufersubstanz, wie Harnstoff oder die Harnstoffwasserlösung und das Abgas nicht gleichmäßig über den gesamten Strömungsquerschnitt verteilt sind oder die zugegebenen Mengen zu groß werden. Besonders kritisch ist hierbei, wenn lokal große Mengen an Reduktionsmittel auf Rohrwandungen oder Harnstoffzersetzungskatalysatoren treffen, während sich gleichzeitig an dieser Stelle ein lokales Minimum der Strömungsgeschwindigkeit befindet. Dies hat zur Folge, dass vom Abgas keine ausreichend hohen Wärmemengen zur Verfügung gestellt werden kann, um eine quantitative Zersetzung des Reduktionsmittels in $NH_3$ sicherzustellen. Vielmehr bilden sich an diesen Stellen die bereits erwähnten Ablagerungen aus unerwünschten Reduktionsmittelzersetzungsprodukten.

Verstärkt wird dieser Effekt noch durch die Tatsache, dass in Fahrzeugen nur ein sehr beschränkter Bauraum für die Aufbereitung des Reduktionsmittels zur Verfügung steht, was zur Folge hat, dass speziell bei der Anströmung von Katalysatoren die Einlauflängen sehr kurz ausfallen, was wiederum eine sehr schlechte Gleichverteilung über den Katalysatorquerschnitt auf Grund von Strömungstotzonen, Querschnittssprüngen und/oder Strömungsabrissen nach sich zieht.

All dies hat zur Folge, dass die $NO_x$-Umsätze meist nicht durch die eigentliche SCR-Reaktion, sondern durch die Freisetzung des Ammoniaks aus dessen Vorläufersubstanzen limitiert werden.

Aus DE3604045C1, EP 362 483 A1 sind Verfahren bekannt, anstelle einer kontinuierlich, stationären Ammoniakzugabe eine periodisch schwankende Zugabe von Ammoniak zu verwenden, um so die $NO_x$-Umsätze am SCR-Katalysator anzuheben. WO2010/140262 A1 offenbart den Oberbegriff des Anspruchs 1.

Dabei wird kurzzeitig mehr Ammoniak zugegeben, als unter stationären Bedingungen notwendig wäre, insbesondere kann das Feedverhältnis hier über eins ansteigen, und anschließend die Ammoniakmenge unter die, bei stationären Bedingungen notwendige Menge abgesenkt, bzw. sogar ganz unterbrochen werden.

Der Grund für die bei diesem Verfahren beobachtete Steigerung des $NO_x$-Umsatzes ist in der Eduktinhibierung durch Ammoniak zu sehen, die durch kurzzeitiges Absenken der $NH_3$-Mengen im Abgas und damit auf der Katalysatoroberfläche verringert werden kann.

Dieses Verfahren lässt sich allerdings nicht ohne weiteres auf SCR- Systeme anwenden, die nicht mit reinem Ammoniak, sondern mit Ammoniakvorläufersubstanzen arbeiten, da es auf Grund der periodisch sehr starken Überdosierung meist zur unvollständigen Reduktionsmittelzersetzung und in deren Folge zu Ablagerung in Form von Cyanursäure, Melamin o.ä. kommt.

Aufgabe der Erfindung ist es, ein Verfahren zur Nachbehandlung von Abgasen in einer Abgasanlage von Brennkraftmaschinen, insbesondere von magerlauffähigen Brennkraftmaschinen von Kraftfahrzeugen, vorzuschlagen, die auf einfache und funktionssichere Weise eine funktionell, insbesondere quantitativ verbesserte $NO_x$-Umsetzung im Abgas ermöglicht.

Diese Aufgabe wird gelöst mit den Merkmalen des Patentanspruchs 1. Vorteilhafte und besonders zweckmäßige Weiterbildungen der Erfindung sind Gegenstand der Unteransprüche.

Um die Eduktinhibierung durch, an der Katalysatoroberfläche angelagertes, Ammoniak zu vermindern, wird die $NO_x$-Rohemission periodisch angehoben und abgesenkt, ohne die zugeführte Reduktionsmittelmenge entsprechend, insbesondere proportional, anzupassen. Dies hat zur Folge, dass in den Phasen mit hohen $NO_x$-Rohemissionen, die $NO_x$-Menge die zugeführte Reduktionsmittelmenge übersteigt, so dass das Feedverhältnis absinkt was wiederum zur Folge hat, dass eine Reaktion des $NO_x$ mit dem am Katalysator angelagerten Ammoniak stattfindet, so dass dessen Ammoniakbeladung zurückgeht, da dieses nun verbraucht wird, ohne dass es durch ausreichend $NH_3$ aus der Gasphase ersetzt werden könnte. Zusätzlich wird durch die Erhöhung der $NO_x$-Rohemission, wie oben beschrieben, die Stoffmengenänderungsgeschwindigkeit und dadurch die umgesetzte $NO_x$-Menge angehoben.

In den Phasen mit niedrigen $NO_x$-Rohemissionen dagegen, übersteigt die zugeführte Reduktionsmittelmenge die für den entsprechenden $NO_x$-Umsatz notwendige Menge, so dass ein hohes Feedverhältnis vorliegt, wodurch der Katalysator wieder mit Ammoniak beladen wird.

Der Vorteil des Verfahrens besteht darin, dass es möglich ist, die am Katalysator eingespeicherte $NH_3$-Menge, auch unter für die Reduktionsmittelzersetzung kritischen Einsatzbedingungen, wie niedrige Abgastemperatur und/oder niedriger Abgasmassenstrom, zu verändern, da auf eine Überhöhung der Reduktionsmittelmenge zur Wiederbeladung des Katalysators mit Ammoniak verzichtet werden kann. Zusätzlich wird die umgesetzte $NO_x$-Menge durch Erhöhen der Stoffmengenänderungsgeschwindigkeit angehoben.

Zudem ermöglicht das Verfahren, die Brennkraftmaschine zumindest phasenweise auf einem höheren $NO_x$-Niveau zu betreiben, was üblicherweise einen verbesserten Wirkungsgrad und damit einen geringeren Kraftstoffverbrauch zur Folge hat.

Um das "Entladen" des Katalysators von Ammoniak zu beschleunigen, ist es möglich, in den Phasen mit hohen $NO_x$-Rohemissionen, die zugeführte Reduktionsmittelmenge abzusenken oder gar komplett zu unterbrechen. Selbstverständlich ist es in Betriebsphasen, in denen eine sichere Reduktionsmittelzersetzung gewährleistet ist, auch denkbar, in den Phasen mit geringen $NO_x$-Rohemissionen die zugeführte Reduktionsmittelmenge anzuheben und so die Einlagerung von Ammoniak zu beschleunigen.

Die $NO_x$-Rohemissionen können, wie bereits ausgeführt, durch das Verändern von Betriebsparametern der Brennkraftmaschine variiert werden. Als Betriebsparameter, die unmittelbaren Einfluss auf die $NO_x$-Emissionen haben, kommen unter anderem der Spritzbeginn, das Luft- zu Kraftstoff-Verhältnis (Lambda), der Einspritzdruck, die Anzahl der Einzeleinspritzungen pro Arbeitstakt, die Ansauglufttemperatur und die bei vorhandener Abgasrückführung rückgeführte Abgasmenge (AGR-Rate) in Frage. Dabei haben folgende Änderungen der vorstehend genannten Betriebsparameter einen Anstieg der $NO_x$-Rohemission zur Folge:

- Verschiebung des Spritzbeginns nach früh,
- Verschiebung des Luft- zu Kraftstoff-Verhältnis in Richtung höheren Lambdawerte,

- Erhöhen des Einspritzdrucks,
- Absenken der Anzahl der Einzeleinspritzungen pro Arbeitstakt,
- Anheben der Ansauglufttemperatur, z.B. durch Bypassen des Ladeluftkühler,
- Absenken der Menge des rückgeführten Abgases.

Selbstverständlich sind die Maßnahmen zur Erhöhung bzw. Verringerung der $NO_x$-Rohemission an die übrigen Betriebsbedingungen der Brennkraftmaschine - insbesondere wenn diese in einem Kraftfahrzeug betrieben wird - anzupassen, z.B. an die maximal mögliche Kühlleistung der Motorkühlung, die Leistungsanforderung durch den Fahrer usw.

Da das Ammoniakein- und -ausspeicherverhalten stark von den Betriebsbedingungen der Abgasnachbehandlung, wie Katalysatortemperatur, Ammoniakbeladungsgrad des Katalysators, $NO_x$-Umsatz, $NO_x$-Rohemission, $NO_2$-Emission stromauf des SCR-Katalysators, $NO_x$-Emission nach System, $NH_3$-Emission nach System und zugeführte Reduktionsmittelmenge, abhängt, ist es von Vorteil, die Periodenlänge und/oder das Maß der Überhöhung und/oder das Maß der Absenkung und/oder die Dauer der Überhöhung und/oder die Dauer der Absenkung der $NO_x$-Rohemissionen und/oder der zugeführten Reduktionsmittelmenge von diesen Größen abhängig zu machen. Dabei ist folgender Zusammenhang zu beachten:

Die Periodendauer und/oder das Maß der Überhöhung und/oder das Maß der Absenkung und/oder die Dauer der Überhöhung und/oder die Dauer der Absenkung der $NO_x$-Rohemissionen steigen mit sinkender Katalysatortemperatur und/oder sinkender $NO_2$-Emission stromauf des SCR-Katalysators, wenn das $NO_2/NOx$-Verhältnis kleiner als eins ist, und/oder steigender $NO_2$-Emission stromauf des SCR-Katalysators, wenn das $NO_2/NOx$-Verhältnis größer als eins ist, und/oder sinkender $NH_3$- Emission nach System und/oder sinkender zugeführter Reduktionsmittelmenge und/oder sinkendem $NO_x$-Umsatz und/oder steigender $NO_x$-Emission nach System.

Die Betriebsbedingungen können zum einen direkt über Sensoren oder über Modelle, in Form von mathematischen Funktionen, Kennfeldern und/oder neuronalen Netzen, bestimmt werden. Derartige Techniken sind dem einschlägigen Fachmann seit langem bekannt, so dass sich eine detaillierte Beschreibung erübrigt.

Die Wirkungsweise des vorgeschlagenen Verfahrens soll nachfolgend anhand einiger Beispiele näher erläutert werden, dies erfolgt unter Zuhilfenahme der Figuren. Es zeigen:

Fig. 1    Eine Prinzipdarstellung des Bereiches innerhalb dessen das Feedverhältnis variiert wird

Fig. 2    Beispiel mit einem ersten periodischen Verlauf der $NO_x$-Anhebung/ $NO_x$-Absenkung und konstantem Reduktionsmittelangebot

Fig. 3    $NO_x$-Umsätze in % bei unterschiedlichen Katalysatortemperaturen und einem Verlauf der $NO_x$-Anhebung/ $NO_x$-Absenkung gemäß Fig. 2

Fig 4    Ein zweiter beispielhafter periodischer Verlauf der $NO_x$-Anhebung/ $NO_x$-Absenkung und konstantem Reduktionsmittelangebot

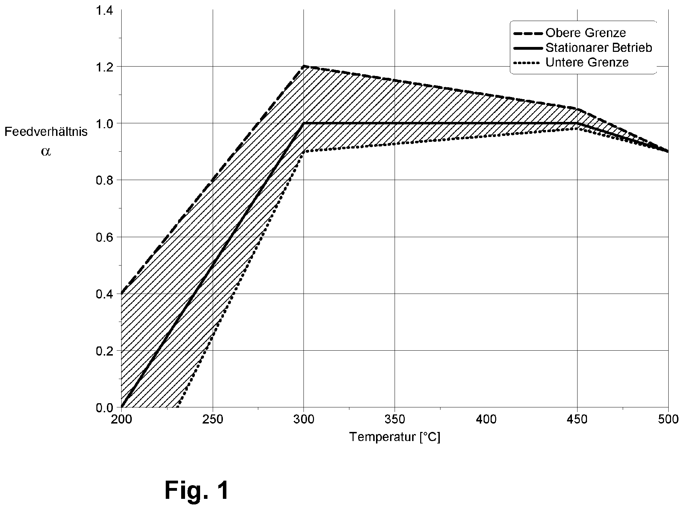

Figur 1 zeigt in einer Prinzipdarstellung die Abhängigkeit von Katalysatortemperatur und Feedverhältnis an einem SCR-Katalysator in einer Brennkraftmaschine im Hinblick auf die maximal erreichbare Umsetzungsrate der Stickoxide, dabei ist auf der Abszisse die Temperatur und auf der Ordinate das Feedverhältnis $\alpha$ eingetragen. Der in durchgezogener Linie dargestellte Kurvenverlauf gibt ein theoretisches Feedverhältnis $\alpha$ an, das bei einer bestimmten Katalysatortemperatur gewählt würde um eine für diese Katalysatortemperatur maximale Umsetzungsrate für die dem Katalysator zugeführten Stickoxiden zu erhalten. Sie stellt damit einen theoretischen stationären Zustand dar. Es wurde nun gefunden, dass dann wenn man das Feedverhältnis $\alpha$ innerhalb bestimmter Grenzen, die sich für einen bestimmten Katalysatortyp in Abhängigkeit von der Katalysatortemperaturen nur experimentell festlegen lassen, variiert, dadurch, dass man die $NO_x$-Rohemission entsprechend verändert, sich die $NO_x$-Umsetzungsrate deutlich anheben lässt. Die angesprochenen Grenzen sind in der Figur 1 ebenfalls temperaturbezogen eingezeichnet, um den prinzipiellen Zusammenhang deutlich zu machen. Dabei stellt die gestrichelte Linie die temperaturbezogene Obergrenze und die punktierte Linie die Untergrenze für die Variationsbereite des Feedverhältnisses $\alpha$ dar. An einem Beispiel erläutert bedeutet dies, dass für eine Katalysatortemperatur von 250°C das Feedverhältnis $\alpha$ um den theoretischen Wert 0,5 in kurzen Abständen, z.B. periodisch, variiert wird und zwar innerhalb der Grenzen von 0,25 und 0,8. Diese Variation wird, wie bereits ausgeführt, dadurch bewerkstellig, dass die $NO_x$-Rohemission der Brennkraftmaschine kurzfristig angehoben und dann wieder abgesenkt wird. Motorische Maßnahmen, die dies bewirken sind dem Fachmann hinlänglich bekannt, es wurde darauf bereits oben eingegangen.

In den Untersuchungen hat es sich als vorteilhaft erwiesen, die $NO_x$-Rohemission und/oder das Feedverhältnis $\alpha$ um wenigstens 20%, bevorzugt um wenigstens 40%, höchst bevorzugt um wenigstens 60% zu variieren.

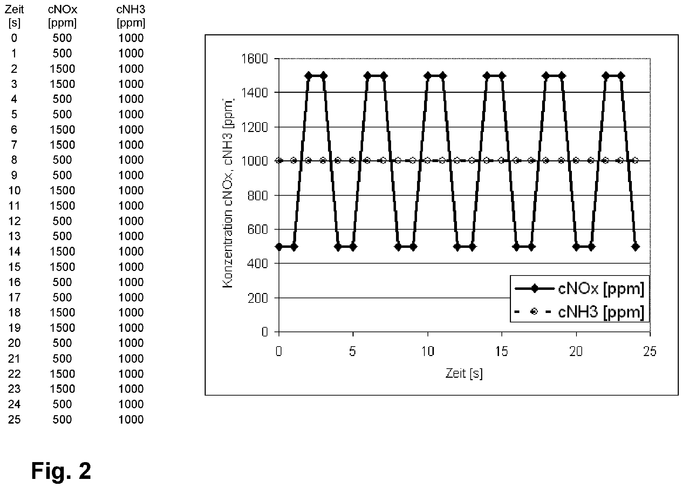

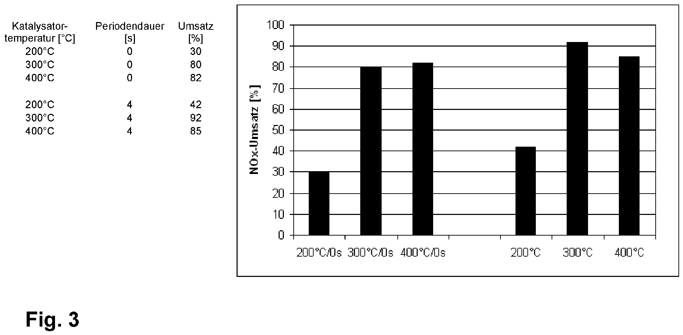

Um den Einfluss der Variation der NO$_x$-Rohemission auf die Umsetzungsrate aufzuzeigen wurden Messungen an einem Probekatalysator durchgeführt, die nachfolgend in Verbindung mit den Figuren 2 und 3 in einem Beispiel beschrieben sind. Bei den Messungen wurde eine Brennkraftmaschine des Typs MAN-D2676 mit externer, gekühlter Abgasrückführung verwendet, in deren Abgastrakt ein SCR-Katalysator mit folgenden Werten verbaut war:

| | |
|---|---|
| - Zelligkeit: | 300cpsi |
| - Aktivkomponente: | V$_2$O$_5$ auf WO$_3$-stabilisiertem TiO$_2$ |
| - Volumen: | 30,3l |

Die Variation der NO$_x$-Rohemission erfolgte durch Variation der auf die Frischluftseite zurückgeführten Abgasmenge (Erhöhen der AGR-Rate). Der Motorbetriebspunkte waren 1200rpm/800Nm, 1200rpm/1200Nm und 1200rpm/1700Nm, die daraus resultierenden Katalysatortemperaturen betrugen 200°C, 300°C und 400°C.

Wie der Fig. 2 zu entnehmen, wurde die NO$_x$-Konzentration (in ppm) so variiert, dass sich ein periodischer trapezförmiger Kurvenverlauf ergab, wobei die NO$_x$-Konzentration zwischen den Grenzwerten 500 ppm und 1500 ppm symmetrisch um die NH$_3$-Konzentration von 1000 ppm pendelte, die Periodendauer betrug 4 Sekunden. In Fig. 3 sind die NO$_x$-Umsatzraten in % für die Katalysatortemperaturen 200°C, 300°C und 400°C, festgehalten, die sich bei dem in Fig. 2 gewählten Verhältnissen ergaben. Als Vergleich sind in die Fig. 3 weiter die NO$_x$-Umsatzraten in % eingezeichnet, die sich bei nicht variierter NO$_x$-Rohemission, also bei Periodendauer 0 Sekunden und ansonsten gleicher Anordnung und Vorgehensweise ergaben. Wie unschwer erkennbar, lässt sich mit der vorgeschlagenen Verfahrensführung eine deutliche Anhebung der NO$_x$-Umsatzraten, auch bei niedrigen Katalysatortemperaturen, erzielen.

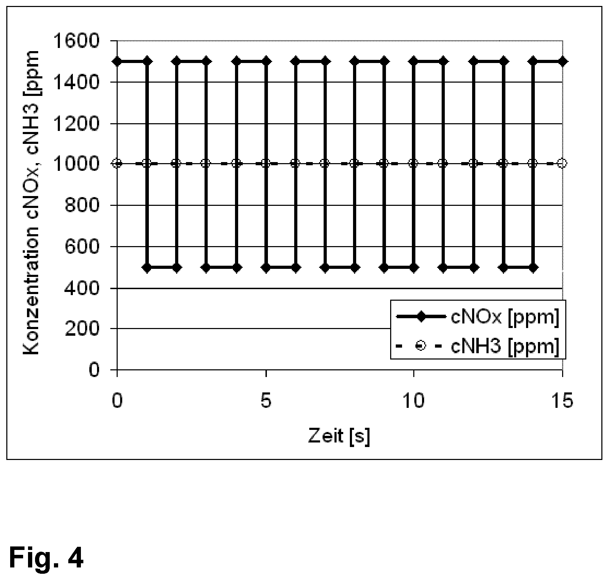

Wie Fig. 4 zeigt kann die NO$_x$-Konzentration (in ppm) natürlich auch nach einem anderen Kurvenverlauf variiert werden. Gezeigt ist hier ein periodischer rechteckiger Kurvenverlauf, wobei die NO$_x$-Konzentration ebenfalls zwischen den Grenzwerten 500 ppm und 1500 ppm symmetrisch um die NH$_3$-Konzentration von 1000 ppm pendelt.

Auch die Periodendauer die im Beispiel nach Figur 3 zwei Sekunden beträgt, kann als Stellgröße zur Optimierung der NO$_x$-Umsatzrate verwendet werden. Gleiches gilt für die Amplitude der Variation. Das Feedverhältnis $\alpha$ muss nicht zwangsläufig symmetrisch um den theoretischen stationären Wert (durchgezogene Linie in Figur 1) pendeln, es kann sich in der Praxis vielmehr als sinnvoll erweisen, die Absenkungen und Anhebungen der NO$_x$-Rohemission asymmetrisch zu wählen (strichlierte und punktierte Linien in Figur 1). Wie bereits oben betont, kann eine allgemein gültige Variation des Feedverhältnisses $\alpha$ nur in soweit angegeben werden, als der Wert $\alpha$ um einen angenommenen theoretischen Wert in Richtung positiv und negativ variiert wird und diese Variation durch kurzzeitiges Anheben und Absenken der NO$_x$-Rohemission erfolgen muss. Das jeweils optimale Maß der Anhebung bzw. Absenkung ist in hohem Maße abhängig von den jeweils verwendeten Katalysatormaterialien und muss für einen Katalysator eines bestimmten Typs empirisch ermittelt werden.

Kerngedanke der vorgeschlagenen Prozessführung ist es, dass das NH$_3$- zu NO$_x$- Verhältnis (Feedverhältnis $\alpha$) durch Verändern der Stickoxid-Rohemission phasenweise variiert wird, derart, dass das Feedverhältnis $\alpha$ phasenweise um eine theoretischen stationären Wert pendelt.

Selbstverständlich besteht die Möglichkeit, die vorstehende beispielhaft veranschaulichte Prozessführung zu variieren. So besteht die Möglichkeit, die Wirkung des Verfahrens dadurch zu optimieren, dass die zugeführte Reduktionsmittelmenge nicht entsprechend, insbesondere nicht proportional, der periodisch schwankenden NO$_x$- Rohemission angepasst wird. Auch eine Absenkung der Reduktionsmittelmenge ist dabei denkbar, es muss dabei aber sichergestellt sein, z.B. durch eine Temperaturerfassung vor und/oder am SCR-Katalysator, dass ein vorgegebenes Temperaturniveau beim wieder Anheben der Reduktionsmittelmenge nicht unterschritten wird.

Weiter kann es von Vorteil sein, die Periodenlänge und/oder das Maß der Überhöhung und/oder das Maß der Absenkung und/oder die Dauer der Überhöhung und/oder die Dauer der Absenkung der NO$_x$- Rohemissionen in Abhängigkeit von den Betriebsbedingungen der Abgasnachbehandlungsanlage zu wählen. Als Betriebsbedingungen können dabei die Katalysatortemperatur und/oder der Ammoniakbeladungsgrad des Katalysators und/oder der NO$_x$-Umsatz und/oder die NO$_x$- Rohemission und/oder die NO$_2$-Menge stromauf des Partikelfilters und/oder die NO$_x$- Emission stromab zur Abgasnachbehandlungsanlage und/oder die NH$_3$- Emission stromab zur Abgasnachbehandlungsanlage und/oder die zugeführte Reduktionsmittelmenge und/oder die eingespeicherte NH$_3$-Menge und/oder die einspeicherbare NH$_3$-Menge berücksichtigt werden. Bestimmen lassen sich solche Betriebsbedingungen über Sensoren und/oder über Modelle, in Form von mathematischen Funktionen, Kennfeldern und/oder neuronalen Netzen. Derartige Techniken sind dem Fachmann bekannt so dass sich eine ausführliche Beschreibung erübrigt.

Sollte den SCR-Katalysator trotz der vorgeschlagenen Maßnahmen unverbrauchtes NH$_3$ passieren, so kann vorgesehen sein, dieses durch eine auf der Reingasseite angeordnete Beladung mit oxidierend wirkendem Material zu zersetzen und/oder eine Ammoniakspeicherfähigkeit in Richtung der Reingasseite ansteigen zu lassen, um Ammoniakpeaks durch Einspeichern abzupuffern.

**Patentansprüche**

1. Verfahren zur Anwendung in Verbindung mit einer Abgasnachbehandlungsanlage die an einer mit Luftüberschuss betriebenen Brennkraftmaschine betrieben wird und wobei die Reduktion der Stickoxide dadurch erfolgt, dass ein ammoniakabspaltendes Reduktionsmittels in den Abgasstrom stromauf eines Katalysators der mit einem Katalysatormaterial zur selektiven katalytischen Reduktion von Stickoxiden beladen ist, beigegeben wird, **dadurch gekennzeichnet, dass** das $NH_3$- zu $NO_x$- Verhältnis (Feedverhältnis $\alpha$) durch Verändern der Stickoxid-Rohemission der Brennkraftmaschine phasenweise variiert wird, derart, dass das Feedverhältnis $\alpha$ phasenweise um einen vorgegebenen Wert pendelt.

2. Verfahren nach Anspruch 1, **dadurch gekennzeichnet, dass** die zugeführte Reduktionsmittelmenge nicht entsprechend, insbesondere nicht proportional, der periodisch schwankenden $NO_x$- Rohemission angepasst wird.

3. Verfahren nach Anspruch 1 oder 2, **dadurch gekennzeichnet, dass** die zugeführte Reduktionsmittelmenge, insbesondere in den Phasen mit hohen $NO_x$- Rohemissionen, verringert oder komplett unterbrochen wird.

4. Verfahren nach einem der Ansprüche 1-3, **dadurch gekennzeichnet, dass** die zugeführte Reduktionsmittelmenge in den Phasen mit niedrigen $NO_x$-Emissionen angehoben wird.

5. Verfahren nach einem der Ansprüche 1-4, **dadurch gekennzeichnet, dass** die $NO_x$- Rohemissionen durch Ändern des Kraftstoff-Einspritzbeginns und/oder des Luft- zu Kraftstoffverhältnisses und/oder des Kraftstoff-Einspritzdrucks und/oder der Anzahl und zeitlichen Abfolge der Kraftstoff-Einzeleinspritzungen während eines Arbeitstaktes und/oder der rückgeführten Abgasmenge und/oder der Ansauglufttemperatur angehoben wird.

6. Verfahren nach einem der Ansprüche 1-5, **dadurch gekennzeichnet, dass** die Periodenlänge und/oder das Maß der Überhöhung und/oder das Maß der Absenkung und/oder die Dauer der Überhöhung und/oder die Dauer der Absenkung der $NO_x$- Rohemissionen in Abhängigkeit von den Betriebsbedingungen der Abgasnachbehandlungsanlage gewählt wird.

7. Verfahren nach Anspruch 6, **dadurch gekennzeichnet, dass** als Betriebsbedingungen die Katalysatortemperatur und/oder der Ammoniakbeladungsgrad des Katalysators und/oder der $NO_x$- Umsatz und/oder die $NO_x$-Rohemission und/oder die $NO_2$-Menge stromauf des SCR-Katalysators und/oder die $NO_x$- Emission stromab zur Abgasnachbehandlungsanlage und/oder die $NH_3$- Emission stromab zur Abgasnachbehandlungsanlage und/oder die zugeführte Reduktionsmittelmenge und/oder die eingespeicherten $NH_3$-Menge und/oder der einspeicherbare $NH_3$-Menge berücksichtigt werden.

8. Verfahren nach einem der Ansprüche 6 oder 7, **dadurch gekennzeichnet, dass** die Betriebsbedingungen der Abgasnachbehandlungsanlage über Sensoren und/oder über Modelle, in Form von mathematischen Funktionen, Kennfeldern und/oder neuronalen Netzen, bestimmt werden.

9. Verfahren nach einem der vorstehend genannten Ansprüche, **dadurch gekennzeichnet, dass** den SCR-Katalysator passierendes unverbrauchtes $NH_3$ durch eine auf der Reingasseite des SCR-Katalysator angeordnete Beladung mit oxidativ wirkenden Material zersetzt wird.

10. Verfahren nach einem der vorstehend genannten Ansprüche, **dadurch gekennzeichnet, dass** die $NO_x$-Rohemission und/oder das Feedverhältnis $\alpha$ um wenigstens 20%, bevorzugt um wenigstens 40%, höchst bevorzugt um wenigstens 60% variiert werden.

**Claims**

1. A method for application in connection with an exhaust aftertreatment system which is operated on an internal combustion engine running with excess air, and wherein the reduction of the nitrogen oxides is effected in that an ammonia-splitting reducing agent is added into the exhaust gas stream upstream of a catalyst which is loaded with a catalyst material for selective catalytic reduction of nitrogen oxides, **characterized in that** the $NH_3$-to-$NO_x$ ratio (feed ratio $\alpha$) is varied in phases by changing the raw nitrogen oxide emission of the internal combustion engine, such that the feed ratio $\alpha$ oscillates in phases about a predetermined value.

**2.** The method according to claim 1, **characterized in that** the supplied amount of reducing agent is not adapted in accordance with, preferably not proportionally to, the periodically fluctuating raw NOx emission.

**3.** The method according to claim 1 or 2, **characterized in that** the supplied amount of reducing agent, preferably in the phases with high raw NOx emissions, is reduced or completely interrupted.

**4.** The method according to any of claims 1-3, **characterized in that** the supplied amount of reducing agent is increased in the phases with low $NO_x$ emissions.

**5.** The method according to any one of claims 1 to 4, **characterized in that** the raw NOx emissions are increased by changing the start of fuel injection and/or the air-to-fuel ratio and/or the fuel injection pressure and/or the number and temporal sequence of the individual fuel injections during a working cycle and/or the amount of recirculated exhaust gas and/or the intake air temperature.

**6.** The method according to any one of claims 1 to 5, **characterized in that** the period length and/or the magnitude of the increase and/or the magnitude of the reduction and/or the duration of the increase and/or the duration of the reduction of the raw NOx emissions is selected as a function of the operating conditions of the exhaust aftertreatment system.

**7.** The method according to claim 6, **characterized in that**, as operating conditions, the catalyst temperature and/or the ammonia loading degree of the catalyst and/or the NOx conversion and/or the raw NOx emission and/or the amount of $NO_2$ upstream of the SCR catalyst and/or the NOx emission downstream of the exhaust aftertreatment system and/or the $NH_3$ emission downstream of the exhaust aftertreatment system and/or the supplied amount of reducing agent and/or the stored $NH_3$ amount and/or the storable $NH_3$ amount are taken into account.

**8.** The method according to any one of claims 6 or 7, **characterized in that** the operating conditions of the exhaust aftertreatment system are determined via sensors and/or via models, in the form of mathematical functions, characteristic maps and/or neural networks.

**9.** The method according to any one of the preceding claims, **characterized in that** unconsumed $NH_3$ passing through the SCR catalyst is decomposed by a loading of oxidatively acting material arranged on the clean-gas side of the SCR catalyst.

**10.** The method according to any one of the preceding claims, **characterized in that** the raw $NO_x$ emission and/or the feed ratio $\alpha$ are varied by at least 20%, preferably by at least 40%, most preferably by at least 60%.

**Revendications**

**1.** Procédé destiné à être utilisé en association avec une unité de post-traitement de gaz d'échappement fonctionnant sur un moteur à combustion interne alimenté en excès d'air et dans lequel la réduction des oxydes d'azote s'effectue par ajout d'un agent réducteur libérant de l'ammoniac dans le flux de gaz d'échappement en amont d'un catalyseur chargé d'un matériau catalytique pour la réduction catalytique sélective des oxydes d'azote, **caractérisé en ce que** le rapport $NH_3/NO_x$ (rapport d'alimentation $\alpha$) est modifié par phases en modifiant les émissions brutes d'oxydes d'azote du moteur à combustion interne, de telle sorte que le rapport d'alimentation $\alpha$ oscille par phases autour d'une valeur prédéfinie.

**2.** Procédé selon la revendication 1, **caractérisé en ce que** la quantité d'agent réducteur amenée n'est pas adaptée en conséquence, en particulier n'est pas proportionnelle, aux émissions brutes de $NO_x$ fluctuant périodiquement.

**3.** Procédé selon la revendication 1 ou 2, **caractérisé en ce que** la quantité d'agent réducteur amenée est réduite ou complètement interrompue, en particulier dans les phases à forte émission de $NO_x$ bruts.

**4.** Procédé selon l'une des revendications 1 à 3, **caractérisé en ce que** la quantité d'agent réducteur amenée est augmentée dans les phases à faibles émissions de NOx.

**5.** Procédé selon l'une des revendications 1 à 4, **caractérisé en ce que** les émissions brutes de $NO_x$ sont augmentées en modifiant le début de l'injection de carburant et/ou le rapport air/carburant et/ou la pression d'injection de carburant et/ou le nombre et la séquence temporelle des injections individuelles de carburant pendant un cycle de travail et/ou la quantité de gaz d'échappement recyclée et/ou la température de l'air d'aspiration.

6. Procédé selon l'une des revendications 1 à 5, **caractérisé en ce que** la durée de la période et/ou le degré d'augmentation et/ou le degré de diminution et/ou la durée de l'augmentation et/ou la durée de la diminution des émissions brutes de $NO_x$ sont choisis en fonction des conditions de fonctionnement de l'unité de post-traitement de gaz d'échappement.

7. Procédé selon la revendication 6, **caractérisé en ce qu'**on prend en compte en tant que conditions de fonctionnement la température du catalyseur et/ou le degré de charge en ammoniac du catalyseur et/ou le taux de conversion des $NO_x$ et/ou les émissions brutes de $NO_x$ et/ou la quantité de $NO_2$ en amont du catalyseur SCR et/ou les émissions de $NO_x$ en aval de l'unité de post-traitement de gaz d'échappement et/ou les émissions de $NH_3$ en aval de l'unité de post-traitement de gaz d'échappement et/ou la quantité d'agent réducteur amenée et/ou la quantité de $NH_3$ stockée et/ou la quantité de $NH_3$ pouvant être stockée.

8. Procédé selon l'une des revendications 6 ou 7, **caractérisé en ce que** les conditions de fonctionnement de l'unité de post-traitement de gaz d'échappement sont déterminées par des capteurs et/ou par des modèles, sous la forme de fonctions mathématiques, de champs de caractéristiques et/ou de réseaux neuronaux.

9. Procédé selon l'une des revendications précédentes, **caractérisé en ce que** le $NH_3$ inutilisé passant à travers le catalyseur SCR est décomposé par un chargement de matériau à effet oxydant disposé du côté gaz purifié du catalyseur SCR.

10. Procédé selon l'une des revendications précédentes, **caractérisé en ce que** les émissions brutes de $NO_x$ et/ou le rapport d'alimentation $\alpha$ varient d'au moins 20 %, de préférence d'au moins 40 %, et de manière particulièrement préférée d'au moins 60 %.

**Fig. 1**

| Zeit [s] | cNOx [ppm] | cNH3 [ppm] |
|---|---|---|
| 0 | 500 | 1000 |
| 1 | 500 | 1000 |
| 2 | 1500 | 1000 |
| 3 | 1500 | 1000 |
| 4 | 500 | 1000 |
| 5 | 500 | 1000 |
| 6 | 1500 | 1000 |
| 7 | 1500 | 1000 |
| 8 | 500 | 1000 |
| 9 | 500 | 1000 |
| 10 | 1500 | 1000 |
| 11 | 1500 | 1000 |
| 12 | 500 | 1000 |
| 13 | 500 | 1000 |
| 14 | 1500 | 1000 |
| 15 | 1500 | 1000 |
| 16 | 500 | 1000 |
| 17 | 500 | 1000 |
| 18 | 1500 | 1000 |
| 19 | 1500 | 1000 |
| 20 | 500 | 1000 |
| 21 | 500 | 1000 |
| 22 | 1500 | 1000 |
| 23 | 1500 | 1000 |
| 24 | 500 | 1000 |
| 25 | 500 | 1000 |

**Fig. 2**

| Katalysator-temperatur [°C] | Periodendauer [s] | Umsatz [%] |
|---|---|---|
| 200°C | 0 | 30 |
| 300°C | 0 | 80 |
| 400°C | 0 | 82 |
|  |  |  |
| 200°C | 4 | 42 |
| 300°C | 4 | 92 |
| 400°C | 4 | 85 |

**Fig. 3**

**Fig. 4**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4038054 A1
- DE 3604045 C1
- EP 362483 A1
- WO 2010140262 A1